# EUROPEAN PATENT APPLICATION

(11) **EP 4 625 924 A1**
(43) Date of publication of application: **01.10.2025**
(21) Application number: 25166241.7
(22) Date of filing: 26.03.2025
(51) Int. Cl.: H04L 41/0833, H04L 43/08

(54) **PATH PLACEMENT BASED ON POWER USAGE RATINGS**

(30) Priority: 26.03.2024 US 202463570174 P; 04.03.2025 US 202519069700
(71) Applicant: Juniper Networks, Inc., Sunnyvale, CA 94089-1206 (US)
(72) Inventor: BARTH, Jonathan C., Sunnyvale, 94089 (US); SANGLI, Srihari Ramachandra, Sunnyvale, 94089 (US); BEERAM, Vishnu Pavan Kumar, Sunnyvale, 94089 (US); SATYANARAYANA, Vyasraj, Sunnyvale, 94089 (US)
(74) Representative: D Young & Co LLP

(57) **Abstract**

In some implementations, a network device may receive one or more indications of one or more power usage ratings associated with a plurality of network devices. The network device may perform path placement on one or more network devices of the plurality of network devices using the one or more power usage ratings.

## Description

### CROSS-REFERENCE TO RELATED APPLICATION

This Patent Application claims priority to U.S. Provisional Patent Application No. 63/570,174, filed on March 26, 2024, entitled "PATH PLACEMENT BASED ON POWER USAGE RATINGS", and to U.S. Patent Application No. 19/069,700, filed on March 4, 2025, entitled "PATH PLACEMENT BASED ON POWER USAGE RATINGS." The disclosure of these prior Applications is considered part of and is incorporated by reference into this Patent Application.

### BACKGROUND

Power usage of a network device in a network can be characterized by various attributes of the network device, such as power specifications of the network device, the location of the network device (e.g., a data center in Canada versus a data center in the Sahara), whether a green power source will override the power specification rating of the network device, the cost of the power usage, or the like.

### SUMMARY

Particular aspects are set out in the appended independent claims. Various optional embodiments are set out in the dependent claims.

Some implementations described herein relate to a method. The method may include receiving, by a network device, one or more indications of one or more power usage ratings associated with a plurality of network devices. The method may include performing, by the network device, path placement on one or more network devices of the plurality of network devices using the one or more power usage ratings.

Some implementations described herein relate to a network device. The network device may include one or more memories and one or more processors. The one or more processors may be to receive one or more indications of one or more power usage ratings associated with a plurality of power groups. The one or more processors may be to perform path placement on one or more power groups of the plurality of power groups using the one or more power usage ratings.

Some implementations described herein relate to a computer-readable medium that comprises (e.g. stores and/or conveys) a set of instructions. The set of instructions, when executed by one or more processors of a network device, may cause the network device to receive one or more extended administrative groups (EAGs) that contain one or more indications of one or more power usage ratings associated with a plurality of network devices. The set of instructions, when executed by one or more processors of the network device, may cause the network device to perform path placement on one or more network devices of the plurality of network devices using the one or more power usage ratings.

### BRIEF DESCRIPTION OF THE DRAWINGS

Fig. 1 is a diagram of an example implementation associated with path placement using power usage ratings.
Fig. 2 is a diagram of an example implementation associated with a power-band-aware-based path placement.
Figs. 3A and 3B are diagrams of an example implementations associated with a network with path placement using power usage ratings.
Fig. 4 is a diagram of an example implementation associated with a hardware and software model on an ingress network device for path placement using power usage ratings.
Fig. 5 is a diagram of an example environment in which systems and/or methods described herein may be implemented.
Fig. 6 is a diagram of example components of a device associated with path placement based on power usage ratings.
Fig. 7 is a diagram of example components of a device associated with path placement based on power usage ratings.
Fig. 8 is a flowchart of an example process associated with path placement based on power usage ratings.

### DETAILED DESCRIPTION

The following detailed description of example implementations refers to the accompanying drawings. The same reference numbers in different drawings may identify the same or similar elements.

Power consumption of a network device (e.g., a power group of the network device) may be modeled as a multi-variable function. Variables that consume power approximately linearly may include the packet processing load, quantity of configured ports, environmental factors (beyond control of routing protocols, such as temperature), or the like. Variables that consume power non-linearly may include a power-on transition of a forwarding component of the network device (e.g., a step increase in power consumption (from 0 W to XW) when powered on); a configuration or setting of the forwarding component (e.g., a configuration to use high-bandwidth memory), which may lead to a step function increase or decrease in power consumption (from *Y* W to *Z* W); a configured feature set (e.g., medium access control (MAC) security (MACSec), timing, or the like); forwarding-component-specific configuration changes that can result in instantaneous higher values of power usage and stabilization to a static band over time; or the like. Therefore, power usage of a network device is generally a non-linear function with various controllable and uncontrollable parameters. Furthermore, measurements have various measurement tolerances.

Due to the non-linearity of power usage, precisely modeling the power usage of a network device (e.g., power group, power usage characteristics, changes in power usage, or the like) may be computationally intensive and/or infeasible. For example, modeling non-linear power usage (where possible) may involve excessive processing resources, memory resources, or the like. Moreover, solutions that involve actual power measurements of network devices (e.g., nodes) may involve frequent communications, may involve factors beyond control by routing protocols, and may not converge.

Some implementations described herein enable modeling approximate power usage behavior of network devices by categorizing network devices (or components thereof, such as power groups) into power usage ratings. In some examples, the power usage ratings may correspond to levels in a power band defined by a uniform, network-wide power optimization policy applied to all ingress nodes in a network and/or one or more sub-networks. The power band may be flexibly defined, such as by including power-based and/or non-power-based qualifiers. In some examples, one or more routing protocols may exchange the power usage ratings. For example, a routing protocol may carry the appropriate power band level(s) in an EAG link-level attribute. For example, the EAG attribute may represent power band levels for a node-level device hierarchy. In some examples, the power usage rating may be used for path placement. For example, an ingress router may derive a power cost based on the EAG attribute and perform path placement by selecting a path with the lowest power cost.

As a result, power consumption (e.g., non-linear power consumption) may be modeled with fewer resources (e.g., processing resources, memory resources, or the like). For example, power consumption may be approximated using the power usage ratings. Furthermore, path placement based on power usage rating may optimize network-wide power usage, which may reduce overall power consumption and provide climate-friendly sustainable results.

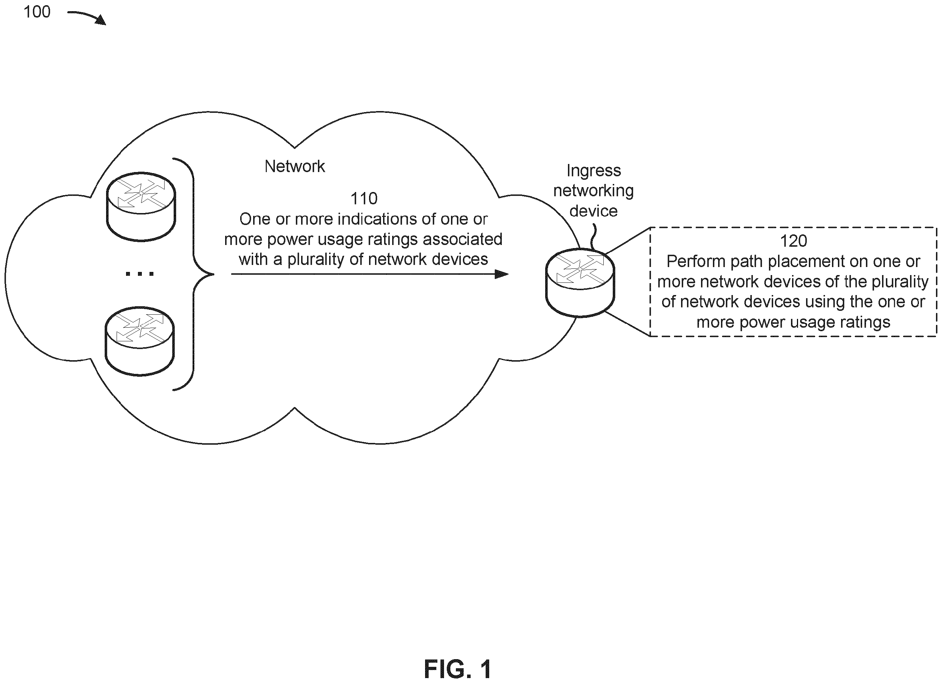

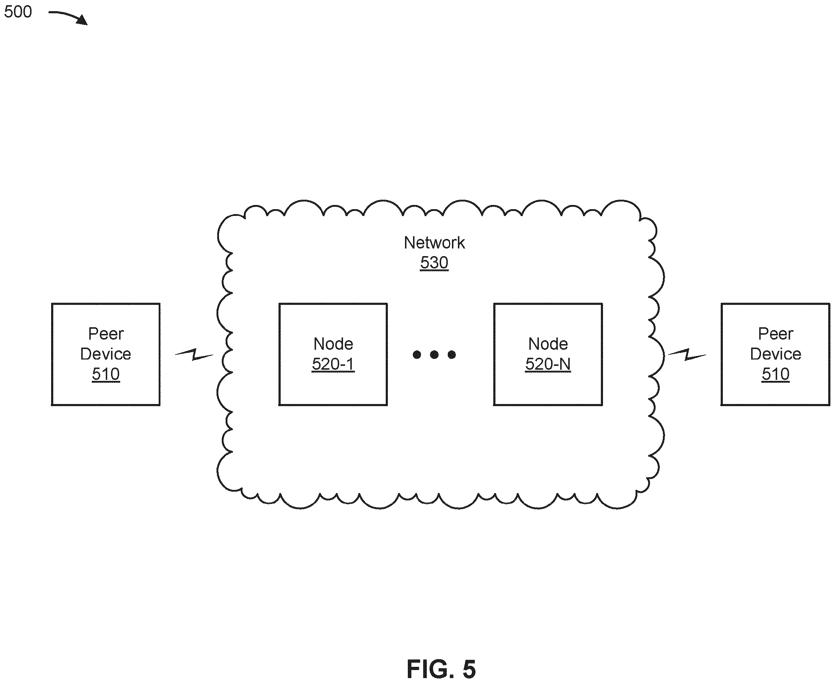

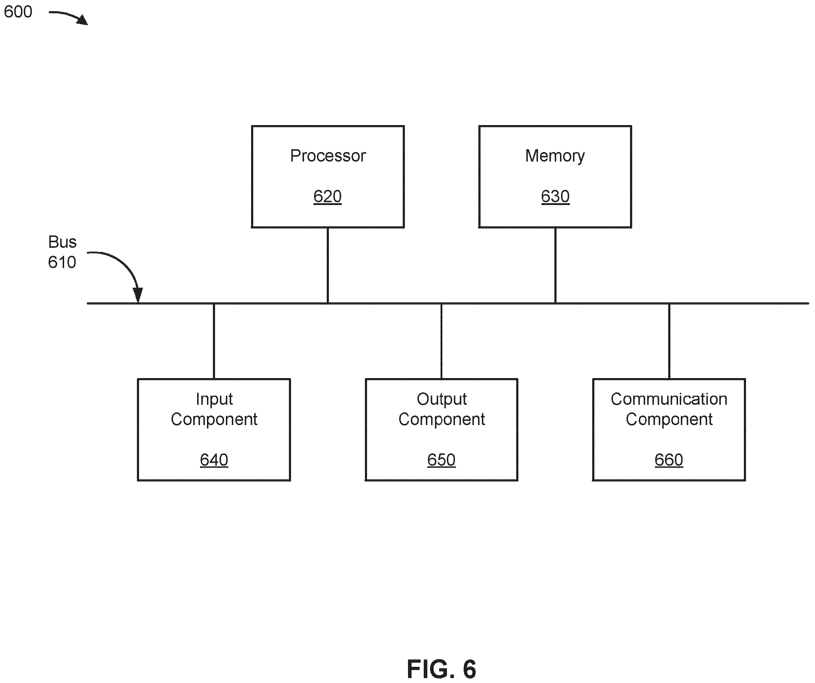

Fig. 1 is a diagram of an example implementation 100 associated with path placement using power usage ratings. As shown in Fig. 1, example implementation 100 includes a network containing a plurality of network devices and an ingress network device (e.g., a head-end network device). These devices are described in more detail below in connection with Fig. 6 and Fig. 5.

As shown by reference number 110, at least one of the plurality of the network devices may transmit, and the ingress network device may receive, one or more indications of one or more power usage ratings associated with the plurality of network devices. A power usage rating may represent an amount of power consumed at a network device. For example, the power usage rating may represent a measured power, a predicted power, an estimated power, a derived power, and/or the like. The power usage rating may represent power consumed by one or more components of the network device (e.g., a power group, a link, or the like) or the network device as a whole. The power usage ratings may be associated with the plurality of network devices in that the power usage rating(s) may represent amounts of power consumed by network devices (or components thereof) of the plurality of network devices.

In some aspects, the one or more power usage ratings may be associated with a plurality of power groups of the plurality of network devices. A power group may be a grouping of links that share a common power management property dictated by hardware board design. One example of a power group may be a group of wide area network (WAN) links that terminate on or originate from the same forwarding application-specific integrated circuit (ASIC) on a flexible physical interface card (PIC) concentrator (FPC). Another example of a power group may be a group of WAN links that terminate on or originate from the same multiplexer. The plurality of power groups may be any suitable group of links that share a common power management property dictated by hardware board design. The one or more power usage ratings may be associated with the plurality of power groups in that the power usage rating(s) may represent amounts of power consumed by power groups of the plurality of power groups.

In some aspects, the one or more power usage ratings may be associated with respective power usage levels in a power band. The one or more power usage ratings may be associated with respective power usage levels in that the power usage rating(s) may correspond to or be represented by the respective power usage levels. For example, a power group having a given power usage rating may belong to a corresponding power band level. The respective power band levels may be configured by a network-wide uniform policy that allows classification of all network devices and/or components (e.g., power groups) to the appropriate power usage levels. Tables 1 and 2 below provide examples of how the respective power band levels may be classified (e.g., mapped) to power usage ratings.

Table 1 below illustrates an example network-wide classification based on power usage (e.g., a power usage rating) of a forwarding component that represents a power group. In the example of Table 1, the network may include both network devices with power-saving capabilities and network devices without power-saving capabilities (e.g., older network devices that are always on). Network devices without power-saving capabilities are mapped to Band 0 in Table 1 below.

**Table 1**

| Band level 0: Un-rated | |
|---|---|
| Band level 1: 5-star energy rating | ≤ 30 W/Tbit |
| Band level 2: 4-star energy rating | 30 W/Tbit - 75 W/Tbit |
| Band level 3: 3-star energy rating | 75 W/Tbit - 200 W/Tbit |
| Band level 4: 2-star energy rating | 200 W/Tbit - 300 W/Tbit |
| Band level 5: 1-star energy rating | ≥ 300 W/Tbit |

Table 2 below illustrates an example network-wide classification based on non-quantifiable attributes.

**Table 2**

| Band level 0: Un-rated | |
|---|---|
| Band level 1 | Routers powered by solar power |
| Band level 2 | Routers associated with a specific entity |
| Band level 3 | Everything else |

In some aspects, the one or more power usage ratings may be based on a plurality of average power usages associated with the plurality of network devices. An average power usage may be associated with a network device in that the average power usage may be an amount of power used by the network device (or a component thereof, such as a power group) averaged over a given amount of time. The average power usage may be a measured power usage, a predicted power usage, an estimated power usage, a derived power usage, or the like. In some examples, the average power usage of a network device may be derived from network device data sheets, hardware design, or the like. In some examples, the average power usage of a network device may be statically computed and made available to routing protocols by platform software. Average power usages (e.g., ranges of average power usages) may be classified according to power band level.

In some aspects, the one or more power usage ratings may be based on a plurality of maximum power usages associated with the plurality of network devices. A maximum power usage may be associated with a network device in that the maximum power usage may be an amount of power used by the network device (or a component thereof, such as a power group) at maximum over a given amount of time. The maximum power usage may be a measured power usage, a predicted power usage, an estimated power usage, a derived power usage, or the like. In some examples, the maximum power usage of a network device may be derived from network device data sheets, hardware design, or the like. In some examples, the maximum power usage of a network device may be statically computed and made available to routing protocols by platform software. Maximum power usages (e.g., ranges of maximum power usages) may be classified according to power band level.

Implementations described herein may be compatible with statistics other than average power usage and maximum power usage, such as minimum power usage or the like. For example, the minimum power usage of a network device may be derived from network device data sheets, hardware design, or the like, or the minimum power usage may be statically computed and made available to routing protocols by platform software. Minimum power usages (e.g., ranges of minimum power usages) may be classified according to power band level.

In some aspects, the ingress network device may receive one or more extended administrative groups (EAGs) that contain the one or more indications of the one or more power usage ratings. The EAGs may be directional link attributes that carry power band levels corresponding to the power usage ratings for network devices, power groups, links or the like. For example, an EAG may be a power band attribute that represents a power efficiency of a power group and/or associated links. Thus, power band level information may be propagated via EAG attributes of link state protocols. In some examples, a link-level power band may be derived from the power usage levels (e.g., power group band levels), bandwidth, power group hierarchy, or the like. For example, the power band level of a 400 gigabit per second (400G) link may be improved as compared to a 100 gigabit per second (100G) link in a power group hierarchy (e.g., an arrangement in which certain power groups contain other power groups based on the hardware design of the network device). In some examples, two ends of a link may belong to two different power usage levels (e.g., in cases where an older network device model pairs with a newer network device model). The ingress network device may receive the one or more indications of the one or more power usage ratings using any suitable technique, such as any suitable interior gateway protocol (IGP) extension.

In some aspects, the one or more EAGs may contain one or more first values that indicate one or more power groups of the one or more network devices and one or more second values that indicate the one or more power usage ratings, and the one or more power usage ratings may correspond to respective power groups of the one or more power groups. For example, every power usage rating (e.g., link power band information) may be carried in a two-level EAG hierarchy. For example, a first value (e.g., an EAG value) may represent a power group mapping. For example, the first value may be a bit that represents a mapping of an interface to a power group (e.g., forwarding component *A* in a router may map to bit *B* in the EAG). The power group mapping may be specific to each network device (e.g., router). The second value (e.g., an EAG value) may represent a power band level (e.g., the actual power band level associated with the link). For example, the second value may represent the power band level of a forwarding component. For example, "green" may map to bit 0, "yellow" may map to bit 3, or the like. This mapping may be global and uniformly used in the network. Techniques described herein may be extended to a multi-level hierarchy using additional EAGs to represent additional levels of the hierarchy.

As shown by reference number 120, the ingress network device may perform path placement on one or more network devices of the plurality of network devices using the one or more power usage ratings. For example, the ingress network device may perform power-group-based path placement. In some examples, the ingress network device may apply most-fill-based traffic polarization to equal cost multi-path (ECMP) techniques. "Most-fill" refers to a path placement approach that involves re-using links that are already carrying traffic (e.g., and avoiding links that are not yet carrying traffic). For example, in cases where multiple paths with equal costs are present (e.g., due to ECMP), most-fill may be used as a tie-breaker rule to choose a link already carrying traffic.

In some aspects, the ingress network device may perform the path placement based on a configured time window. For example, the network-wide policy may cause a network-wide power-optimization (e.g., power-saving) policy to be applied during the configured time window and not applied outside the configured time window. The configured time window may be an off-peak time window (e.g., when the network experiences low levels of traffic). For example, the network traffic may have a predictable pattern (e.g., time-of-day, day-of-week, monthly, or the like). These patterns may be discovered (e.g., observed, learned, or the like) and used to re-optimize paths. The discovered network traffic patterns may dictate the configuration of the network-wide power-optimization policy.

For example, network operation may be divided into K time intervals including at least one peak time interval, during which the network-wide power-optimization policy is disabled and non-power-usage-based path placement is followed, and at least one off-peak time interval, during which the network-wide power-optimization policy is applied and power-usage-based path placement is followed. For example, a 24-hour period may be divided into two intervals: a peak time interval (e.g., 7:00-23:50) and an off-peak time interval (e.g., 23:50-7:00). During the off-peak time interval, the ingress network device may perform the path placement based on the network-wide power-optimization policy. The ingress network device may facilitate a graceful transition between the peak and off-peak time intervals. For example, the ingress network device may use make-before-break techniques during re-optimization of a path to ensure minimum packet loss.

In some aspects, the ingress network device may perform the path placement using one or more power costs corresponding to respective power usage ratings of the one or more power usage ratings. For example, the ingress network device may perform the path placement by minimizing power cost. For example, the ingress network device may use a mapping of power usage ratings (and/or power band levels) to power costs to arrive at an optimal path placement based on a minimal power cost computation. The mapping between the power usage ratings and the power costs may be uniform across all nodes (e.g., network devices) in the network. For example, the power usage levels may correspond to different colors, such as gray, green, yellow, or the like (e.g., where the gray power usage level corresponds all ingress router links and power-saving-incapable links and other power usage levels correspond to power-saving-capable links with different power usage ratings). In this example, the gray links may correspond to the lowest power cost (e.g., because those links cannot be turned off and therefore have a power cost of zero to polarize), green may correspond to the next lowest power cost after gray, yellow may correspond to the next lowest power cost after green and gray, and so forth. In this manner, the power band may be mapped to power cost (e.g., a power cost metric).

In some aspects, the ingress network device may perform the path placement using the one or more power costs by iteratively performing one or more path placement attempts based on the one or more power costs. For example, the ingress network device may use a power-band-based distributed path placement process (e.g., distributed computation logic) based on an ordered set of constraints to optimize a path for power cost and/or reserved bandwidth. For example, the network may arrive at a power-usage-optimal path based on the ordered set of constraints using re-optimization timers. In some examples, the ingress network node may optimize for reserved bandwidth by performing a greedy path computation for reserved bandwidth on a graph that is pruned of all traffic engineering (TE) links that do not satisfy the specified constraints. A greedy path computation may involve making a locally optimal choice at each stage of the computation. In some examples, the ingress network node may optimize network-wide power usage based on a traffic pattern (e.g., the ingress network node may place the path(s) using the power-band-based distributed path placement process during an off-peak time-of-day).

In some examples, the ingress network node may perform the power-band-based distributed path placement process as follows. The ingress network device may first attempt to place a path using only gray links in accordance with a first rule. If the attempt to place a path using only gray links fails, then the ingress network device may attempt to place a path using only gray and green links (e.g., where green is the next power usage level after gray) in accordance with a second rule. If the attempt to place a path using only gray and green links fails, then the ingress network device may attempt to place a path using only gray, green, and yellow links (e.g., where yellow is the next power usage level after green) in accordance with a third rule. The ingress network device may iterate (e.g., repeat) this process by including the next power usage level at each stage until a path is successfully placed. The ingress network device may eventually cover the entire network topology and, thus, may ultimately arrive at a successful path placement.

Although operations in connection with example 100 are described as being performed by an ingress network device, it will be appreciated that any suitable network device may perform one or more operations described herein. For example, one or more such operations may be performed by any suitable switch, router, firewall, server, controller, or the like.

Performing the path placement using the one or more power usage ratings may enable path placements using fewer resources (e.g., processing resources, memory resources, or the like). For example, power consumption (e.g., no-linear power consumption) may be approximated using the power usage ratings. Furthermore, path placement based on power usage rating may optimize network-wide power usage, which may reduce overall power consumption and provide climate-friendly sustainable results. The one or more power usage ratings being associated with respective power usage levels in a power band may help to reduce bandwidth (e.g., by avoiding excessive IGP communications).

As indicated above, Fig. 1 is provided as an example. Other examples may differ from what is described with regard to Fig. 1. The number and arrangement of devices shown in Fig. 1 are provided as an example. In practice, there may be additional devices, fewer devices, different devices, or differently arranged devices than those shown in Fig. 1. Furthermore, two or more devices shown in Fig. 1 may be implemented within a single device, or a single device shown in Fig. 1 may be implemented as multiple, distributed devices. Additionally, or alternatively, a set of devices (e.g., one or more devices) shown in Fig. 1 may perform one or more functions described as being performed by another set of devices shown in Fig. 1.

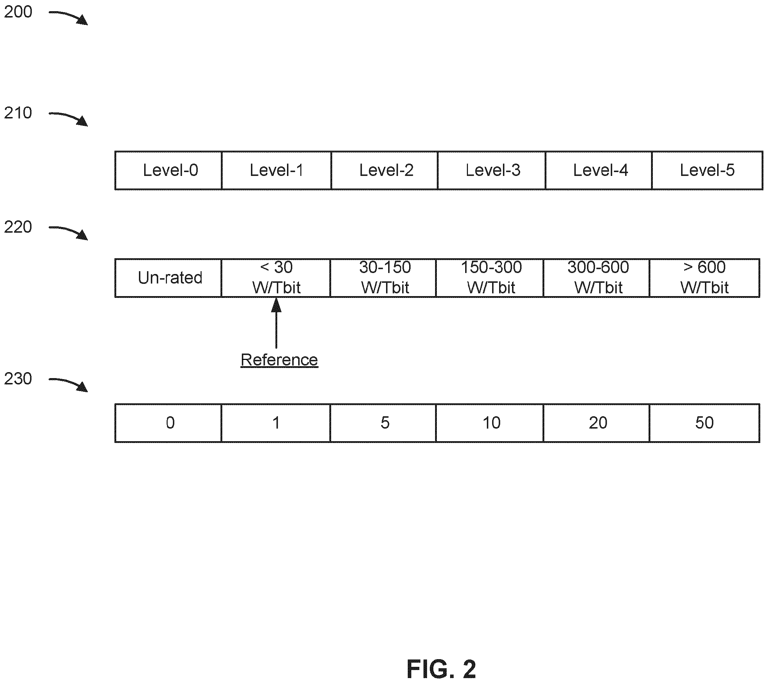

Fig. 2 is a diagram of an example implementation 200 associated with a power-band-aware-based path placement.

As shown, a power band 210 may include six power usage levels, levels 0-6. In some examples, level 0 may be gray, level 1 may be green, level 2 may be blue, level 3 may be yellow, level 4 may be orange, and level 5 may be red. For example, the power usage levels may enable classification of power groups. Levels 0-6 may be mapped to power usage ratings 220. For example, level 0 may correspond to unrated network devices, level 1 may correspond to less than 30 W/Tbit, level 2 may correspond to 30-150 W/Tbit, level 3 may correspond to 150-300 W/Tbit, level 4 may correspond to 300-600 W/Tbit, and level 5 may correspond to greater than 600 W/Tbit.

The power usage ratings 220 are mapped to power usage costs 230. In some examples, a reference power usage rating may enable relative grading of the colors to derive the respective power usage costs. For example, green (level 1) may be the reference power usage rating and, therefore, may be assigned a power usage cost of 1. Other power usage levels may be assigned power usage costs relative to the green power usage cost of 1. For example, yellow (level 3) may be assigned a power usage cost of 300 W/Tbit / 30 W/Tbit = 10 (where 300 W/Tbit is the maximum power usage corresponding to level 3 and 30 W/Tbit is the maximum power corresponding to level 1). Power usage costs may be similarly computed for other power levels. Level 0 may be assigned a power usage cost of 0.

In example 200, network devices with lower power usage ratings correspond to lower reference costs. However, in other examples, network devices with lower power usage ratings may correspond to higher reference costs (e.g., because future network devices may be more power efficient than current-generation products).

As indicated above, Fig. 2 is provided as an example. Other examples may differ from what is described with regard to Fig. 2.

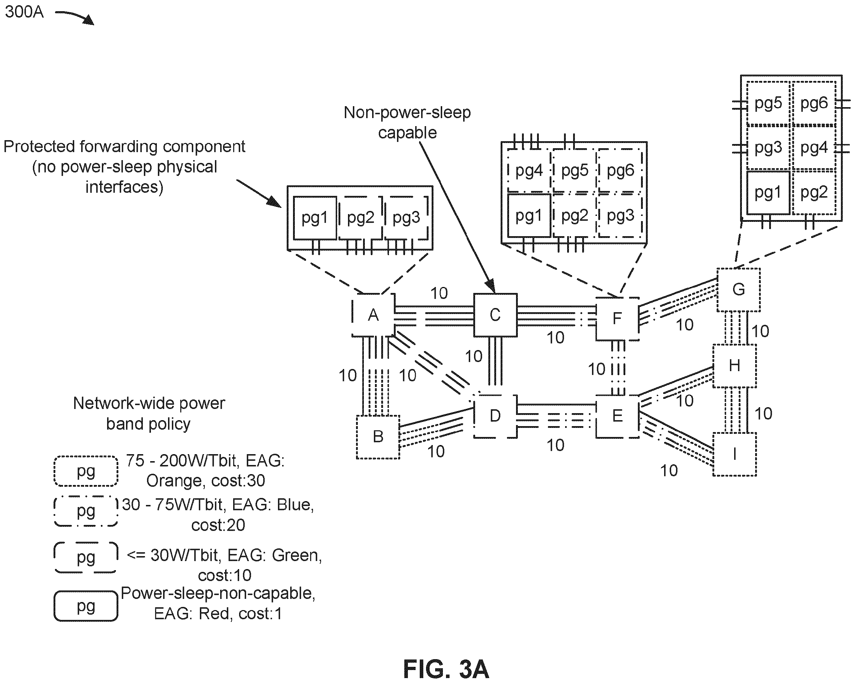

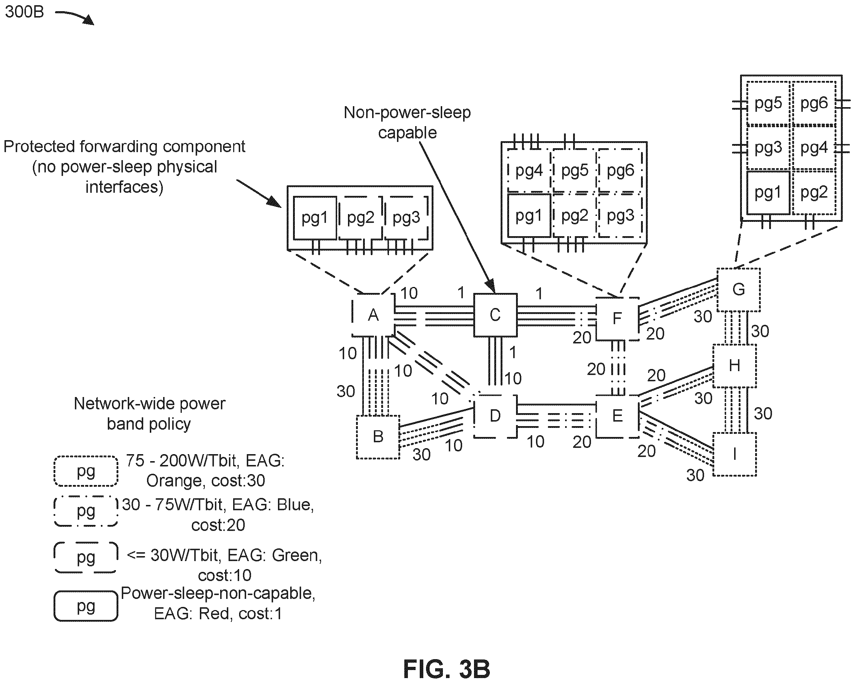

Figs. 3A and 3B are diagrams of an example implementations 300A and 300B associated with a network with path placement using power usage ratings. Examples 300A and 300B show a network containing routers A-I. Routers B, G, H, and I are edge routers that form a traffic engineering tunnel mesh, and routers A, C, D, E, and F are core routers. Routers A, F, and G contain multiple power groups. The routers and power groups have various power saving capabilities and/or power usage ratings.

With reference to Fig. 3A, during a peak time interval (e.g., 5:00-0:00), all power usage costs (e.g., IGP or traffic engineering metrics) are symmetric (e.g., with a value of 10). As a result, the optimal B-to-I path, {b, d, e, i}, has a power usage cost of 30, and the optimal B-to-H path, {b, d, e, h}, also has a power usage cost of 30. Multiple B-to-G paths are optimal: {b, d, e, f, g}, {b, d, c, f, g}, {b, a, c, f, g}, and {b, d, e, h, g} each has a power usage cost of 40. During the peak time interval, the routers B, I, H, and G may place paths using random path selection, traffic engineering plus plus (TE++), and/or the like. A network-wide power band policy is configured but not active during the peak time interval.

With reference to Fig. 3B, during an off-peak time interval (e.g., 0:00-5:00), the routers B, I, H, and G may use the network-wide power band policy to route link state packets (LSPs). For example, the routers B, I, H, and G may use EAGs to create a customized topology local to routers B, I, H, and G, and the power usage cost defined in the network-wide power band policy may be used if the EAG of a traffic engineering link matches the policy. In some examples, nonmatching traffic engineering links may use optimization metrics, which may be defined as a fallback in the policy. An example command line interface (CLI) is shown below.
[edit protocols mpls]
label-switched-path A-to-G {
te-local-policy p1 {
most-fill;

During the off-peak time interval, the routers B, I, H, and G may use an augmented traffic engineering topology and/or the network-wide power band policy to identify the following paths based on the network-wide power band policy: B-to-I path {b, a, c, d, e, i}, with a power usage cost of 71; B-to-H path {b, a, c, d, e, h}, with a power usage cost of 71; and B-toG path {b, a, c, f, g}, with a power usage cost of 61. The paths (e.g., tunnels) may include router C (e.g., in cases where router C has available resources, e.g., in accordance with resource reservation protocol (RSVP)) because router C is non-power-sleep capable and, thus, may have a lowest power usage cost. During the off-peak time interval, the routers B, I, H, and G may place paths using most-fill path selection, TE++, and/or the like.

The reduced load on the network may trigger a power management protocol (PMP) policy to power sleep certain interfaces, thus conserving resources. However, certain forwarding components and/or interfaces (e.g., power group 1 in router A) may be protected and never shutdown, which may preserve high available (HA). Additionally, or alternatively, fast reroute (FRR) tunnels may be re-routed in accordance with the network-wide power band policy.

As indicated above, Figs. 3A and 3B are provided as examples. Other examples may differ from what is described with regard to Figs. 3A and 3B.

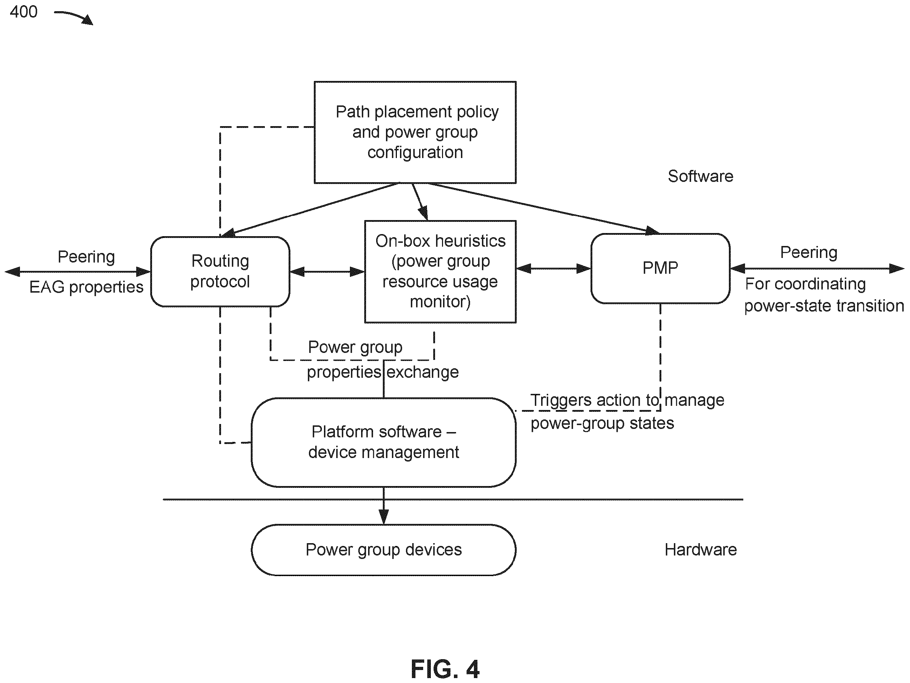

Fig. 4 is a diagram of an example implementation 400 associated with a hardware and software model on an ingress network device for path placement using power usage ratings. As shown, software on the ingress network device may include a path placement policy and power group configuration, a routing protocol, on-box heuristics logic (e.g., a power group resource usage monitor), a PMP, and platform software. The hardware may include the power group devices.

In some examples, the platform software may share a power group identifier and power usage level of the power band with higher-layer software protocols (e.g., the routing protocol and/or PMP). For example, the platform software may share the power group values associated with one or more links. The ingress network device may use configured power band mapping values to derive the power usage levels associated with a power group. The routing protocol may use the power group identifier and the power band level in the EAG attribute. For example, the routing protocol may use EAGs during path placement.

PMP may be a protocol that coordinates with neighboring network devices (e.g., routers) to control the state of a link, thereby enabling graceful transitions of power states of the link. PMP, the on-box heuristics logic, and/or other platform software hooks may work together to control the power states of the power group independently.

The following shows an example configuration of a network-wide policy in accordance with implementations described herein.
#Platform software enables power-optimization
set chassis dynamic-power-optimization
#Configuration allowing for Power band level derivation
set chassis power-band-profile <profile_name> band level 0 unrated
set chassis power-band-profile <profile_name> band level 1 less than 30WpTbit
set chassis power-band-profile <profile_name> band level 2 from 30WpTbit to 100WpTbit
Set chassis power-band-profile <profile_name> band level N greater than 600WpTbit
Set chassis power-group-id <1-64> device forwarding component < forwarding component_number: forwarding component-0/0> power-band-profile <profile-name>
#et-x/y/z derives from associated forwarding component and power-band-profile # PMP protocol
set protocols pmp apply-time t1 to t2
#Path placement process
set routing-options te-policy policy <policy-name> apply-time t1 to t2;

As indicated above, Fig. 4 is provided as an example. Other examples may differ from what is described with regard to Fig. 4.

Fig. 5 is a diagram of an example environment 500 in which systems and/or methods described herein may be implemented. As shown in Fig. 5, environment 500 may include one or more peer devices 510, a group of nodes 520 (shown as node 520-1 through node 520-N), and a network 530. Devices of environment 500 may interconnect via wired connections, wireless connections, or a combination of wired and wireless connections.

Peer device 510 includes one or more devices capable of receiving and/or providing network traffic. For example, peer device 510 may include a traffic transfer device, such as a router, a gateway, a switch, a firewall, a hub, a bridge, a reverse proxy, a server (e.g., a proxy server, a server executing a virtual machine, etc.), a security device, an intrusion detection device, a load balancer, or a similar type of device. In some implementations, peer device 510 may include an endpoint device that is a source or a destination for network traffic. For example, peer device 510 may include a computer or a similar type of device. Peer device 510 may receive network traffic from and/or may provide network traffic (e.g., payload packets) to other peer devices 510 via network 530 (e.g., by routing payload packets using node(s) 520 as an intermediary). In some implementations, peer device 510 may include an edge device that is located at an edge of one or more networks. For example, peer device 510 receive network traffic from and/or may provide network traffic (e.g., payload packets) to devices external to network 530.

Node 520 includes one or more devices capable of receiving, processing, storing, routing, and/or providing traffic (e.g., a payload packet, a file, etc.) in a manner described herein. For example, node 520 may include a router, such as a label switching router (LSR), a label edge router (LER), an ingress router, an egress router, a provider router (e.g., a provider edge router, a provider core router, etc.), a virtual router, or another type of router. Additionally, or alternatively, node 520 may include a gateway, a switch, a firewall, a hub, a bridge, a reverse proxy, a server (e.g., a proxy server, a cloud server, a data center server, etc.), a load balancer, and/or a similar device.

In some implementations, node 520 may be a physical device implemented within a housing, such as a chassis. In some implementations, node 520 may be a virtual device implemented by one or more computer devices of a cloud computing environment or a data center.

In some implementations, node 520 may be configured with one or more segment translation tables. In some implementations, node 520 may receive a payload packet from peer device 510. In some implementations, node 520 may encapsulate the payload packet using a compressed routing header (CRH) and may route the internet protocol (IP) payload packet to another node 520, using one or more techniques described elsewhere herein. In some implementations, node 520 may be an edge node in network 530. In some implementations, node 520 may be an intermediary node in network 530 (i.e., a node between two or more edge nodes).

Network 530 includes one or more wired and/or wireless networks. For example, network 530 may include a cellular network (e.g., a fifth generation (5G) network, a fourth generation (4G) network, such as a long-term evolution (LTE) network, a third generation (3G) network, a code division multiple access (CDMA) network, a public land mobile network (PLMN)), a local area network (LAN), a WAN, a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 5 are provided as one or more examples. In practice, there may be additional devices and/or networks, fewer devices and/or networks, different devices and/or networks, or differently arranged devices and/or networks than those shown in Fig. 5. Furthermore, two or more devices shown in Fig. 5 may be implemented within a single device, or a single device shown in Fig. 5 may be implemented as multiple, distributed devices. Additionally, or alternatively, a set of devices (e.g., one or more devices) of environment 500 may perform one or more functions described as being performed by another set of devices of environment 500.

Fig. 6 is a diagram of example components of a device 600 associated with path placement based on power usage ratings. The device 600 may correspond to peer device 510 and/or node 520. In some implementations, peer device 510 and/or node 520 may include one or more devices 600 and/or one or more components of the device 600. As shown in Fig. 6, the device 600 may include a bus 610, a processor 620, a memory 630, an input component 640, an output component 650, and/or a communication component 660.

The bus 610 may include one or more components that enable wired and/or wireless communication among the components of the device 600. The bus 610 may couple together two or more components of Fig. 6, such as via operative coupling, communicative coupling, electronic coupling, and/or electric coupling. For example, the bus 610 may include an electrical connection (e.g., a wire, a trace, and/or a lead) and/or a wireless bus. The processor 620 may include a central processing unit, a graphics processing unit, a microprocessor, a controller, a microcontroller, a digital signal processor, a field-programmable gate array, an application-specific integrated circuit, and/or another type of processing component. The processor 620 may be implemented in hardware, firmware, or a combination of hardware and software. In some implementations, the processor 620 may include one or more processors capable of being programmed to perform one or more operations or processes described elsewhere herein.

The memory 630 may include volatile and/or nonvolatile memory. For example, the memory 630 may include random access memory (RAM), read only memory (ROM), a hard disk drive, and/or another type of memory (e.g., a flash memory, a magnetic memory, and/or an optical memory). The memory 630 may include internal memory (e.g., RAM, ROM, or a hard disk drive) and/or removable memory (e.g., removable via a universal serial bus connection). The memory 630 may be a computer-readable storage medium. The memory 630 may store information, one or more instructions, and/or software (e.g., one or more software applications) related to the operation of the device 600. In some implementations, the memory 630 may include one or more memories that are coupled (e.g., communicatively coupled) to one or more processors (e.g., processor 620), such as via the bus 610. Communicative coupling between a processor 620 and a memory 630 may enable the processor 620 to read and/or process information stored in the memory 630 and/or to store information in the memory 630.

The input component 640 may enable the device 600 to receive input, such as user input and/or sensed input. For example, the input component 640 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 650 may enable the device 600 to provide output, such as via a display, a speaker, and/or a light-emitting diode. The communication component 660 may enable the device 600 to communicate with other devices via a wired connection and/or a wireless connection. For example, the communication component 660 may include a receiver, a transmitter, a transceiver, a modem, a network interface card, and/or an antenna.

The device 600 may perform one or more operations or processes described herein. For example, a computer-readable medium (e.g., memory 630) may provide a set of instructions (e.g., one or more instructions or code) for execution by the processor 620. A computer readable medium may be provided as a computer-readable storage medium (e.g. memory 630) which stores such instructions. A computer-readable medium may be implemented by way of a memory device, which may be described as being non-transitory in nature. A memory device includes memory space within a single physical storage device or memory space spread across multiple physical storage devices. Examples of a computer-readable storage medium may include a CD, a DVD, a storage device, a diskette, a tape, flash memory, physical memory, or any other computer-readable storage medium. A computer-readable medium may also or alternatively be provided by way of a transmission medium by which instructions may be conveyed. A computer-readable transmission medium may include carrier waves, transmission signals or the like. A computer-readable transmission medium may convey instructions between components of a single computer system and/or between plural separate computer systems.

The processor 620 may execute the set of instructions to perform one or more operations or processes described herein. In some implementations, execution of the set of instructions, by one or more processors 620, causes the one or more processors 620 and/or the device 600 to perform one or more operations or processes described herein. In some implementations, hardwired circuitry may be used instead of or in combination with the instructions to perform one or more operations or processes described herein. Additionally, or alternatively, the processor 620 may be configured to perform one or more operations or processes described herein. Thus, implementations described herein are not limited to any specific combination of hardware circuitry and software.

The number and arrangement of components shown in Fig. 6 are provided as an example. The device 600 may include additional components, fewer components, different components, or differently arranged components than those shown in Fig. 6. Additionally, or alternatively, a set of components (e.g., one or more components) of the device 600 may perform one or more functions described as being performed by another set of components of the device 600.

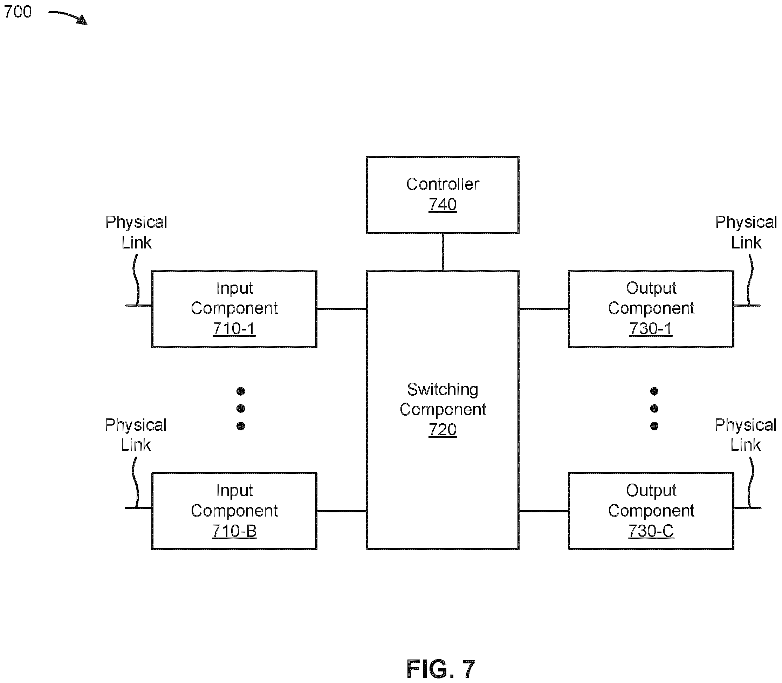

Fig. 7 is a diagram of example components of a device 700 associated with path placement based on power usage ratings. Device 700 may correspond to peer device 510 and/or node 520. In some implementations, peer device 510 and/or node 520 may include one or more devices 700 and/or one or more components of device 700. As shown in Fig. 7, device 700 may include one or more input components 710-1 through 710-B (B ≥ 1) (hereinafter referred to collectively as input components 710, and individually as input component 710), a switching component 720, one or more output components 730-1 through 730-C (C ≥ 1) (hereinafter referred to collectively as output components 730, and individually as output component 730), and a controller 740.

Input component 710 may be one or more points of attachment for physical links and may be one or more points of entry for incoming traffic, such as packets. Input component 710 may process incoming traffic, such as by performing data link layer encapsulation or decapsulation. In some implementations, input component 710 may transmit and/or receive packets. In some implementations, input component 710 may include an input line card that includes one or more packet processing components (e.g., in the form of integrated circuits), such as one or more interface cards (IFCs), packet forwarding components, line card controller components, input ports, processors, memories, and/or input queues. In some implementations, device 700 may include one or more input components 710.

Switching component 720 may interconnect input components 710 with output components 730. In some implementations, switching component 720 may be implemented via one or more crossbars, via busses, and/or with shared memories. The shared memories may act as temporary buffers to store packets from input components 710 before the packets are eventually scheduled for delivery to output components 730. In some implementations, switching component 720 may enable input components 710, output components 730, and/or controller 740 to communicate with one another.

Output component 730 may store packets and may schedule packets for transmission on output physical links. Output component 730 may support data link layer encapsulation or decapsulation, and/or a variety of higher-level protocols. In some implementations, output component 730 may transmit packets and/or receive packets. In some implementations, output component 730 may include an output line card that includes one or more packet processing components (e.g., in the form of integrated circuits), such as one or more IFCs, packet forwarding components, line card controller components, output ports, processors, memories, and/or output queues. In some implementations, device 700 may include one or more output components 730. In some implementations, input component 710 and output component 730 may be implemented by the same set of components (e.g., and input/output component may be a combination of input component 710 and output component 730).

Controller 740 includes a processor in the form of, for example, a central processing unit (CPU), a graphics processing unit (GPU), an accelerated processing unit (APU), a microprocessor, a microcontroller, a digital signal processor (DSP), an field-programmable gate array (FPGA), an ASIC, and/or another type of processor. The processor is implemented in hardware, firmware, or a combination of hardware and software. In some implementations, controller 740 may include one or more processors that can be programmed to perform a function.

In some implementations, controller 740 may include a RAM, a ROM, and/or another type of dynamic or static storage device (e.g., a flash memory, a magnetic memory, an optical memory, etc.) that stores information and/or instructions for use by controller 740.

In some implementations, controller 740 may communicate with other devices, networks, and/or systems connected to device 700 to exchange information regarding network topology. Controller 740 may create routing tables based on the network topology information, may create forwarding tables based on the routing tables, and may forward the forwarding tables to input components 710 and/or output components 730. Input components 710 and/or output components 730 may use the forwarding tables to perform route lookups for incoming and/or outgoing packets.

Controller 740 may perform one or more processes described herein. Controller 740 may perform these processes in response to executing software instructions provided by a computer-readable medium, such as a computer readable storage medium or a computer readable transmission medium as described above.

Software instructions may be read into a memory and/or storage component associated with controller 740 from another computer-readable medium or from another device via a communication interface. When executed, software instructions stored in a memory and/or storage component associated with controller 740 may cause controller 740 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 7 are provided as an example. In practice, device 700 may include additional components, fewer components, different components, or differently arranged components than those shown in Fig. 7. Additionally, or alternatively, a set of components (e.g., one or more components) of device 700 may perform one or more functions described as being performed by another set of components of device 700.

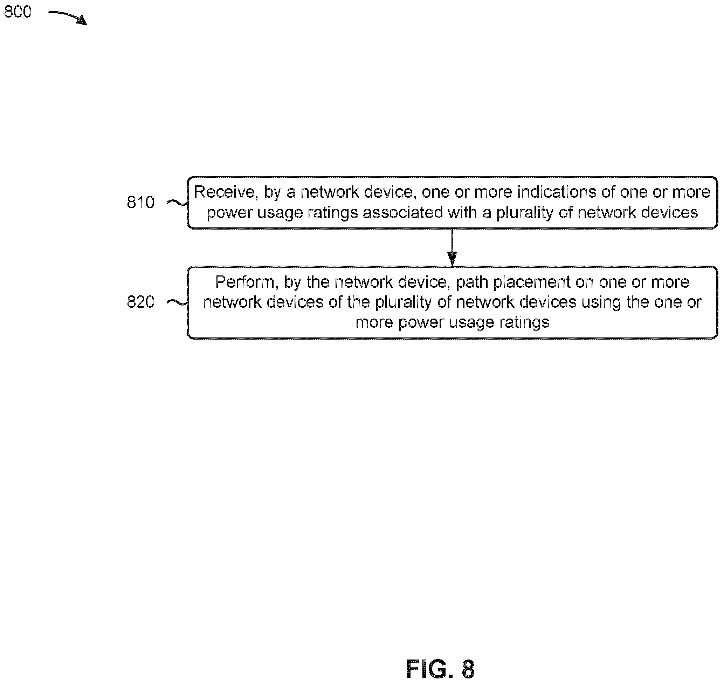

Fig. 8 is a flowchart of an example process 800 associated with path placement based on power usage ratings. In some implementations, one or more process blocks of Fig. 8 are performed by a network device (e.g., the ingress network device shown in Fig. 1). In some implementations, one or more process blocks of Fig. 8 are performed by another device or a group of devices separate from or including the network device, such as a peer device (e.g., peer device 510) and/or a node (e.g., node 520). Additionally, or alternatively, one or more process blocks of Fig. 8 may be performed by one or more components of device 600, such as processor 620, memory 630, input component 640, output component 650, and/or communication component 660, and/or one or more components of device 700, such as input component 710, switching component 720, output component 730, and/or controller 740.

As shown in Fig. 8, process 800 may include receiving one or more indications of one or more power usage ratings associated with a plurality of network devices (block 810). For example, the network device may receive one or more indications of one or more power usage ratings associated with a plurality of network devices, as described above.

As further shown in Fig. 8, process 800 may include performing path placement on one or more network devices of the plurality of network devices using the one or more power usage ratings (block 820). For example, the network device may perform path placement on one or more network devices of the plurality of network devices using the one or more power usage ratings, as described above.

Process 800 may include additional implementations, such as any single implementation or any combination of implementations described below and/or in connection with one or more other processes described elsewhere herein.

In a first implementation, performing the path placement includes performing the path placement based on a configured time window.

In a second implementation, alone or in combination with the first implementation, the one or more power usage ratings are associated with a plurality of power groups of the plurality of network devices.

In a third implementation, alone or in combination with one or more of the first and second implementations, the one or more power usage ratings are associated with respective power usage levels in a power band.

In a fourth implementation, alone or in combination with one or more of the first through third implementations, the one or more power usage ratings are based on a plurality of average power usages associated with the plurality of network devices.

In a fifth implementation, alone or in combination with one or more of the first through fourth implementations, the one or more power usage ratings are based on a plurality of maximum power usages associated with the plurality of network devices.

In a sixth implementation, alone or in combination with one or more of the first through fifth implementations, receiving the one or more indications of the one or more power usage ratings includes receiving one or more EAGs that contain the one or more indications of the one or more power usage ratings.

In a seventh implementation, alone or in combination with one or more of the first through sixth implementations, the one or more EAGs contain one or more first values that indicate one or more power groups of the one or more network devices and one or more second values that indicate the one or more power usage ratings, and the one or more power usage ratings correspond to respective power groups of the one or more power groups.

In an eighth implementation, alone or in combination with one or more of the first through seventh implementations, performing the path placement using the one or more power usage ratings includes performing the path placement using one or more power costs corresponding to respective power usage ratings of the one or more power usage ratings.

In a ninth implementation, alone or in combination with one or more of the first through eighth implementations, performing the path placement using the one or more power costs includes iteratively performing one or more path placement attempts based on the one or more power costs.

In a tenth implementation, alone or in combination with one or more of the first through ninth implementations, the network device is an ingress network device.

Although Fig. 8 shows example blocks of process 800, in some implementations, process 800 includes additional blocks, fewer blocks, different blocks, or differently arranged blocks than those depicted in Fig. 8. Additionally, or alternatively, two or more of the blocks of process 800 may be performed in parallel.

Therefore, from one perspective, there have been described approaches for a network device which can receive one or more indications of one or more power usage ratings associated with a plurality of network devices. The network device may perform path placement on one or more network devices of the plurality of network devices using the one or more power usage ratings.

Further examples of feature combinations taught by the present disclosure are set out in the following numbered clauses.

Clause 1. A method, comprising: receiving, by a network device, one or more indications of one or more power usage ratings associated with a plurality of network devices; and performing, by the network device, path placement on one or more network devices of the plurality of network devices using the one or more power usage ratings.

Clause 2. The method of clause 1, wherein performing the path placement includes performing the path placement based on a configured time window.

Clause 3. The method of clause 1, or 2 wherein the one or more power usage ratings are associated with a plurality of power groups of the plurality of network devices.

Clause 4. The method of clause 1, 2 or 3, wherein the one or more power usage ratings are associated with respective power usage levels in a power band.

Clause 5. The method of any of clauses 1 to 4, wherein the one or more power usage ratings are based on a plurality of average power usages associated with the plurality of network devices.

Clause 6. The method of any of clauses 1 to 5, wherein the one or more power usage ratings are based on a plurality of maximum power usages associated with the plurality of network devices.

Clause 7. The method of any of clauses 1 to 6, wherein receiving the one or more indications of the one or more power usage ratings includes receiving one or more extended administrative groups (EAGs) that contain the one or more indications of the one or more power usage ratings.

Clause 8. The method of clause 7, wherein the one or more EAGs contain one or more first values that indicate one or more power groups of the one or more network devices and one or more second values that indicate the one or more power usage ratings, and wherein the one or more power usage ratings correspond to respective power groups of the one or more power groups.

Clause 9. The method of any of clauses 1 to 8, wherein performing the path placement using the one or more power usage ratings includes performing the path placement using one or more power costs corresponding to respective power usage ratings of the one or more power usage ratings.

Clause 10. The method of clause 9, wherein performing the path placement using the one or more power costs includes iteratively performing one or more path placement attempts based on the one or more power costs.

Clause 11. The method of any of clauses 1 to 10, wherein the network device is an ingress network device.

Clause 12. A network device, comprising: one or more memories; and one or more processors to: receive one or more indications of one or more power usage ratings associated with a plurality of power groups; and perform path placement on one or more power groups of the plurality of power groups using the one or more power usage ratings.

Clause 13. The network device of clause 12, wherein the one or more processors, to perform the path placement, are to perform the path placement based on a configured time window.

Clause 14. The network device of clause 12 or 13, wherein the one or more power usage ratings are associated with respective power usage levels.

Clause 15. The network device of clause 12, 13 or 14, wherein the one or more power usage ratings are based on a plurality of average power usages associated with the plurality of power groups.

Clause 16. The network device of any of clauses 12 to 15, wherein the one or more power usage ratings are based on a plurality of maximum power usages associated with the plurality of power groups.

Clause 17. A computer-readable medium comprising a set of instructions, the set of instructions comprising: one or more instructions that, when executed by one or more processors of a network device, cause the network device to: receive one or more extended administrative groups (EAGs) that contain one or more indications of one or more power usage ratings associated with a plurality of network devices; and perform path placement on one or more network devices of the plurality of network devices using the one or more power usage ratings.

Clause 18. The computer-readable medium of clause 17, wherein the one or more EAGs contain one or more first values that indicate one or more power groups of the one or more network devices and one or more second values that indicate the one or more power usage ratings, and wherein the one or more power usage ratings correspond to respective power groups of the one or more power groups.

Clause 19. The computer-readable medium of clause 17 or 18, wherein the one or more instructions, that cause the network device to perform the path placement using the one or more power usage ratings, cause the network device to perform the path placement using one or more power costs corresponding to respective power usage ratings of the one or more power usage ratings.

Clause 20. The computer-readable medium of clause 19, wherein the one or more instructions, that cause the network device to perform the path placement using the one or more power costs, cause the network device to iteratively perform one or more path placement attempts based on the one or more power costs.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, traffic or content may include a set of packets. A packet may refer to a communication structure for communicating information, such as a protocol data unit (PDU), a service data unit (SDU), a network packet, a datagram, a segment, a message, a block, a frame (e.g., an Ethernet frame), a portion of any of the above, and/or another type of formatted or unformatted unit of data capable of being transmitted via a network.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors to: perform X; perform Y; and perform Z," that claim should be interpreted to mean "one or more processors to perform X; one or more (possibly different) processors to perform Y; and one or more (also possibly different) processors to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method, comprising:
receiving, by a network device, one or more indications of one or more power usage ratings associated with a plurality of network devices; and
performing, by the network device, path placement on one or more network devices of the plurality of network devices using the one or more power usage ratings.

2. The method of claim 1, wherein performing the path placement includes performing the path placement based on a configured time window.

3. The method of claim 1, or 2 wherein the one or more power usage ratings are associated with a plurality of power groups of the plurality of network devices.

4. The method of claim 1, 2 or 3, wherein the one or more power usage ratings are associated with respective power usage levels in a power band.

5. The method of any of claims 1 to 4, wherein the one or more power usage ratings are based on a plurality of average power usages associated with the plurality of network devices.

6. The method of any of claims 1 to 5, wherein the one or more power usage ratings are based on a plurality of maximum power usages associated with the plurality of network devices.

7. The method of any of claims 1 to 6, wherein receiving the one or more indications of the one or more power usage ratings includes receiving one or more extended administrative groups (EAGs) that contain the one or more indications of the one or more power usage ratings.

8. The method of claim 7, wherein the one or more EAGs contain one or more first values that indicate one or more power groups of the one or more network devices and one or more second values that indicate the one or more power usage ratings, and wherein the one or more power usage ratings correspond to respective power groups of the one or more power groups.

9. The method of any of claims 1 to 8, wherein performing the path placement using the one or more power usage ratings includes performing the path placement using one or more power costs corresponding to respective power usage ratings of the one or more power usage ratings.

10. The method of claim 9, wherein performing the path placement using the one or more power costs includes iteratively performing one or more path placement attempts based on the one or more power costs.

11. The method of any of claims 1 to 10, wherein the network device is an ingress network device.

12. A network device, configured to:
receive one or more indications of one or more power usage ratings associated with a plurality of power groups; and
perform path placement on one or more power groups of the plurality of power groups using the one or more power usage ratings.

13. The network device of claim 12, configured to perform the path placement based on a configured time window.

14. The network device of claim 12 or 13, wherein the one or more power usage ratings are selected from the group comprising: associated with respective power usage levels; based on a plurality of average power usages associated with the plurality of power groups; and based on a plurality of maximum power usages associated with the plurality of power groups.

15. A computer-readable medium comprising a set of instructions, the set of instructions comprising:
one or more instructions that, when executed by one or more processors of a network device, cause the network device to carry out the method of any of claims 1 to 11.
